# EUROPEAN PATENT APPLICATION

(11) **EP 2 026 119 A1**
(43) Date of publication of application: **18.02.2009**
(21) Application number: 08152254.2
(22) Date of filing: 04.03.2008
(51) Int. Cl.: G02F 1/1335

(54) **Reflective grating cell arrangement controling light distribution of display**

(30) Priority: 16.08.2007 KR 20070082391
(71) Applicant: Samsung Electronics Co., Ltd, Suwon-si, Gyeonggi-do 443-742 (KR)
(72) Inventor: Kim, Jin-hwan, Gyeonggi-do (KR); Cheong, Byoung-ho, Gyeonggi-do (KR); Lee, Hong-seok, Gyeonggi-do (KR); Lee, Jae-ho, Gyeonggi-do (KR)
(74) Representative: Greene, Simon Kenneth

(57) **Abstract**

Gratings on a reflective plate (45) of a (transflective) display are arranged in a plurality of cells (45a,45b). The direction and periods of the gratings in the cells differ to improve the light efficiency of a display by diffracting light (Ls) transmitted through a colour filter (50) within the viewing angle of a user of the display.

## Description

### BACKGROUND OF THE INVENTION

Apparatuses and methods consistent with the present invention relate to a reflective plate, a display having the same, and controlling the distribution of reflected light, and more particularly, to a reflective plate for controlling the distribution of reflected light in order to improve light efficiency so that the distribution of the reflected light corresponds to a viewing angle of a viewer, a display including the reflective plate, and controlling the distribution of reflected light.

Various portable terminals have been developed along with the advancements of communication and display devices. Examples of portable terminals include personal digital assistants (PDAs), portable multimedia players (PMPs), digital multimedia broadcasting (DMB), etc. A liquid crystal display (LCD), which does not have light emitting capabilities, is a kind of light receiving flat panel display (FPD) used in such a portable terminal. Thus, the LCD controls the transmissivity of light generated by a light source in each pixel to form an image. For this purpose, a backlight unit is installed on a back surface of the LCD so as to generate light.

One of the major advantages of the portable terminals is that they can be used anywhere due to their portability characteristics. Thus, the portable terminals are frequently used outdoors in sunny conditions. In this case, however, the visibility of a display is low due to the relative darkness of a screen. Thus, the portability characteristics of the portable terminals can be fully utilized. Also, even if LCDs are used in outdoor billboards or displays in electrically illuminated public places, the visibility of LCDs must be secured.

In order to solve this problem, displays having reflection modes and transmission modes have been developed. In the reflection modes, images are formed using outside light, and in the transmission modes, images are formed using backlight. In general, scattering patterns are formed in an area of a liquid crystal layer in order to realize a reflection mode so as to reflect outside light. However, since the scattering patterns scatter and reflect incident light thereon, the distribution of the incident light is not uniform. Also, since the direction of the reflected light is not controlled by the scattering patterns, the reflected light is diffused. Thus, there is a limitation in improving the efficiency of light focused into a viewing angle of a viewer.

### SUMMARY OF THE INVENTION

The present invention provides a reflective plate for controlling the distribution of reflected light in order to improve light efficiency so that the distribution of the reflected light corresponds to a viewing angle of a viewer, a display including the reflective plate, and a method controlling the direction and intensity of light reflected from the reflective plate.

According to an aspect of the present invention, there is provided a reflective plate including a plurality of diffracting grating cells including gratings reflecting incident light thereon, wherein the gratings are arranged at predetermined periods, and at least one of the arrangement periods and an arrangement direction of each of the gratings is adjusted in order to define the distribution of the reflected light.

The diffracting grating cells may define the distribution of the reflected light so that a diagonal direction of the distribution of the reflected light is shorter than one of horizontal and vertical directions of the distribution of the reflected light, the horizontal and vertical directions being in the plane of the gratings.

The diffracting grating cells may define the distribution of the reflected light so that the distribution has one of a square shape, a diamond shape, and a cross shape.

A ratio of the depth of the diffracting grating to a wavelength of incident light may be in a range of 0.2 ±0.04.

According to another aspect of the present invention, there is provided a display including: a reflective plate including a plurality of diffracting grating cells including gratings reflecting incident light thereon, wherein the gratings are arranged at predetermined periods, and at least one of the arrangement periods and an arrangement direction of each of the gratings is adjusted to define a distribution of reflected light; and a color unit which is provided on the reflective plate and which transmits the incident light having a predetermined wavelength.

The display may further include: a transmitting unit adjacent to the reflective plate; and a backlight unit disposed under the reflective plate and the transmitting unit in order to supply light to the transmitting unit.

According to another aspect of the present invention, there is provided a method of controlling a distribution of reflected light, including: arranging a plurality of diffracting grating cells comprising gratings reflecting incident light, wherein the gratings are arranged at predetermined periods; and adjusting at least one of the arrangement period and an arrangement direction of each of the gratings in order to define a distribution of the incident light.

### BRIEF DESCRIPTION OF THE DRAWINGS

The above and other features of the present invention will become more apparent by describing in detail exemplary embodiments thereof with reference to the attached drawings in which:
FIGS. 1A and 1B illustrate a path of light incident on and reflected from a reflective plate, according to an embodiment of the present invention;
FIG. 2 illustrates a relationship between a grating arrangement direction of a reflective plate and incident light thereon according to an embodiment of the present invention;
FIGS. 3A through 3H illustrate distributions of reflected light depending on period variations of a diffracting grating of a reflective plate, wherein the distributions of the reflected light are measured with changes of a rotation angle of the diffracting grating, according to an embodiment of the present invention;
FIG. 4 illustrates a distribution of light reflected from a reflective plate matched with a table (T/λ, δᵢ) of grating cells of the reflective plate, according to an embodiment of the present invention;
FIGS. 5A through 5C illustrate distributions of light reflected from a reflective plate according to embodiments of the present invention;
FIG. 6A through 6H illustrate distributions of reflected light varying with arrangement structures of diffracting grating cells of a reflective plate, according to embodiments of the present invention;
FIG. 7 is a graph illustrating variations of diffraction efficiency with respect to a depth of a diffracting grating of a reflective plate, according to an embodiment of the present invention;
FIG. 8 is a cross-sectional view of a transreflective display including a reflective plate according to an embodiment of the present invention;
FIG. 9 illustrates a reflective plate according to an embodiment of the present invention; and
FIG. 10 illustrates a display including a reflective plate according to an embodiment of the present invention.

### DETAILED DESCRIPTION OF THE INVENTION

A reflective plate, a display including the reflective plate, and a method of controlling the distribution of reflected light according to the present invention will now be described in detail with reference to the attached drawings.

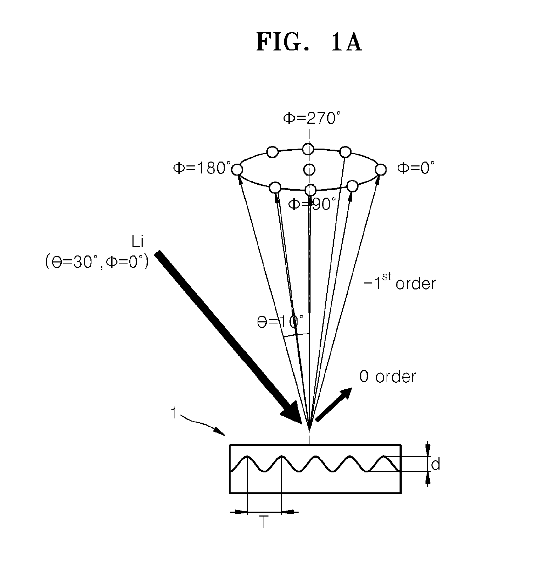

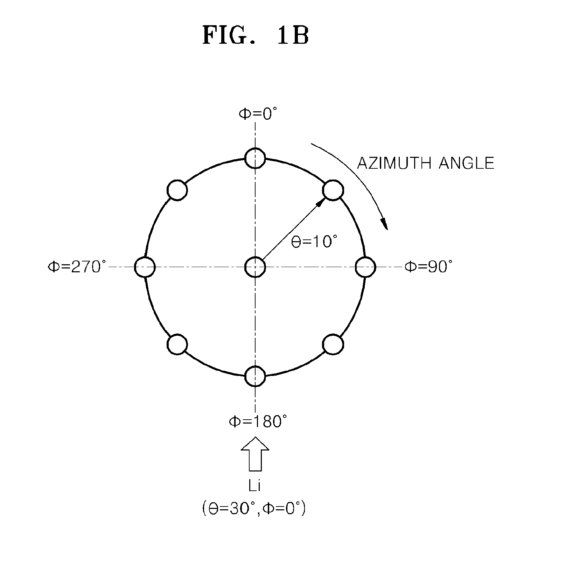

FIGS. 1A and 1B illustrate the distribution of light Li incident onto and reflected from a diffracting grating 1. The distribution of light is represented with respect to a 1st order diffraction beam using an azimuth angle ϕ and a polar angle θ. The azimuth angle ϕ indicates a rotation angle of light projected onto an incidence surface with respect to a predetermined reference line, and the polar angle θ indicates a gradient of the light with respect to a normal of the incidence surface. When the light Li having an azimuth angle ϕ of 30° and a polar angle θ of 0° is incident onto and reflected from the diffracting grating 1, a direction of the reflected light may be controlled depending on a period or an arrangement direction of the diffracting grating 1. The direction of the light diffracted from the diffracting grating 1 is determined depending on a wavelength λ of the light, a period T of the diffracting grating 1, and a direction of the light Li. In the present embodiment, the light Li can be uniformly transmitted in a specific direction using the diffracting grating 1 so as to control the distribution of reflected light. Also, a depth d of the diffracting grating 1 can be controlled to control an intensity of the light Li.

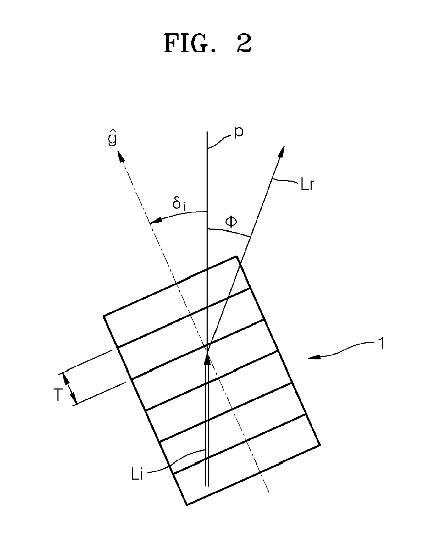

FIG. 2 is a plan view of the diffracting grating 1. Referring to FIG. 2, a grating vector perpendicular to patterns of the diffracting grating 1 is ĝ. Also, an angle between a projection line p of the incident light Li with respect to the diffracting grating 1 and the grating vector ĝ is represented using a rotation angle δᵢ of the diffracting grating 1. For example, at least one of a period T and an arrangement direction of a diffracting grating may be adjusted to adjust a direction of reflected light, i.e., the distribution of the reflected light in a desired position, wherein light is incident at a first wavelength λ and a first reflection angle. The arrangement direction of the diffracting grating may be represented using the rotation angle δᵢ.

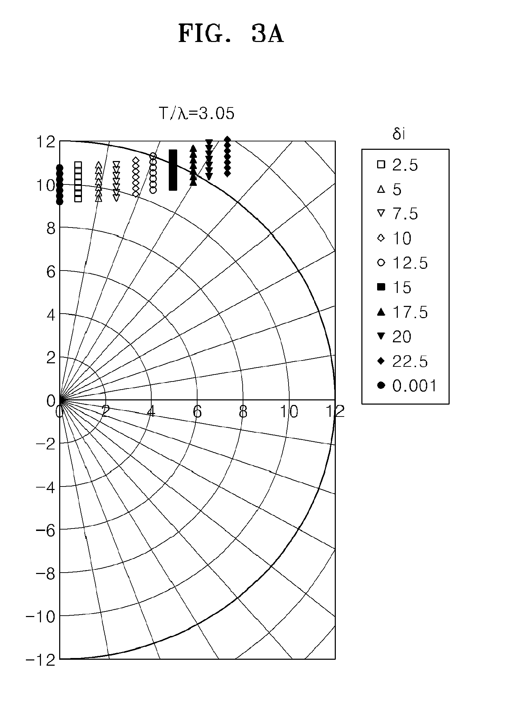

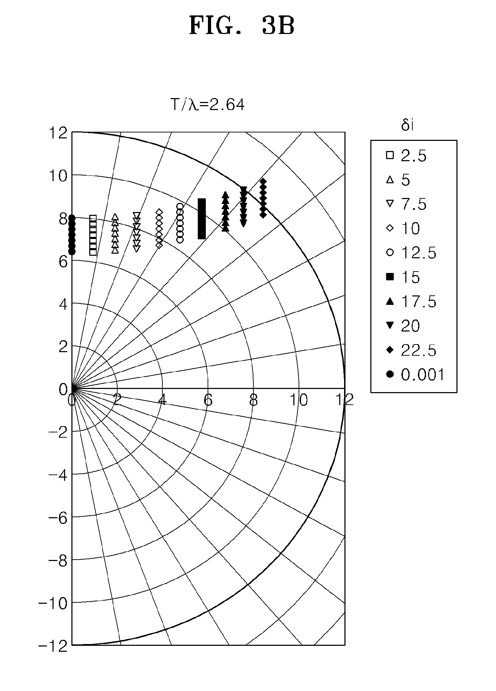

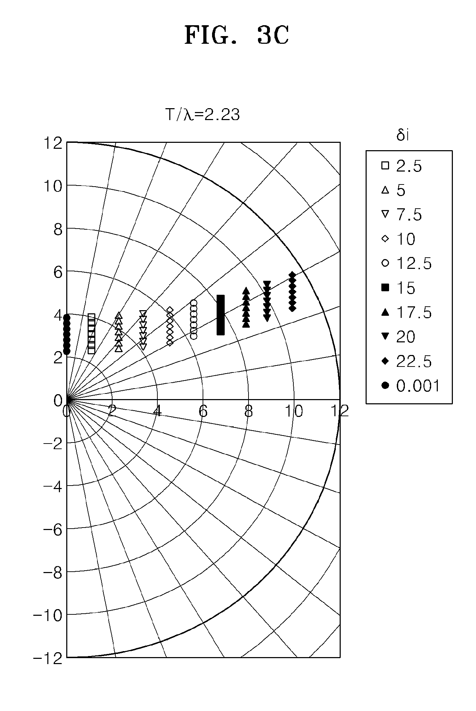

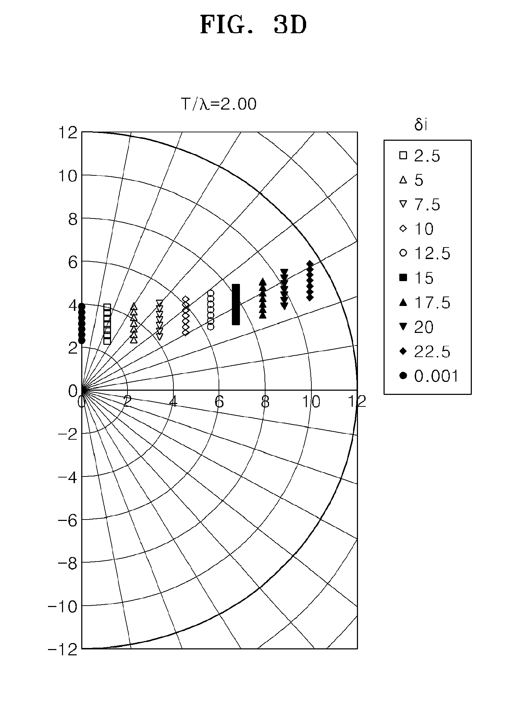

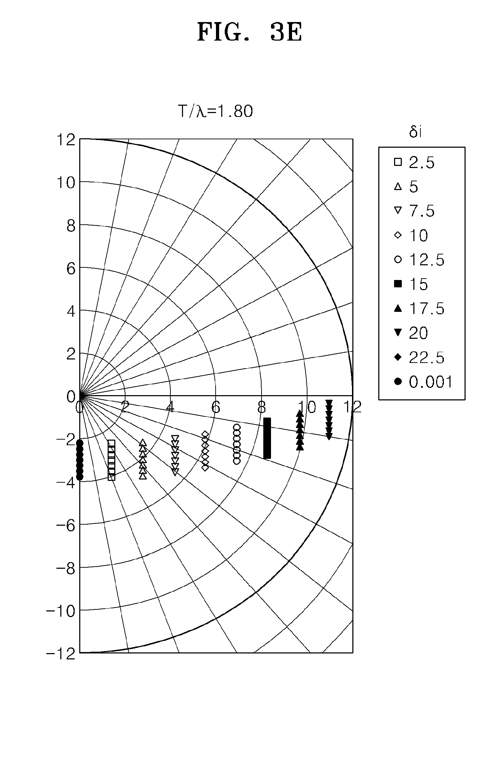

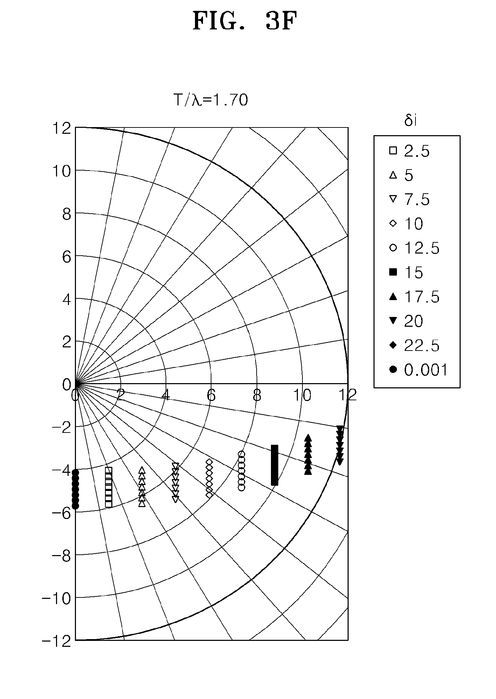

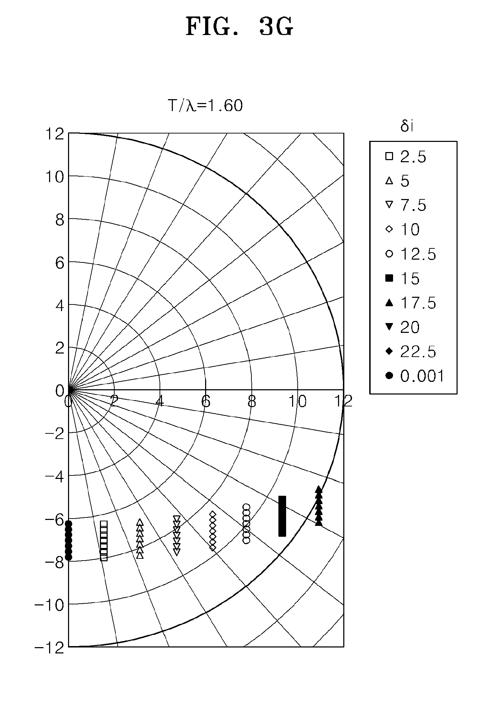

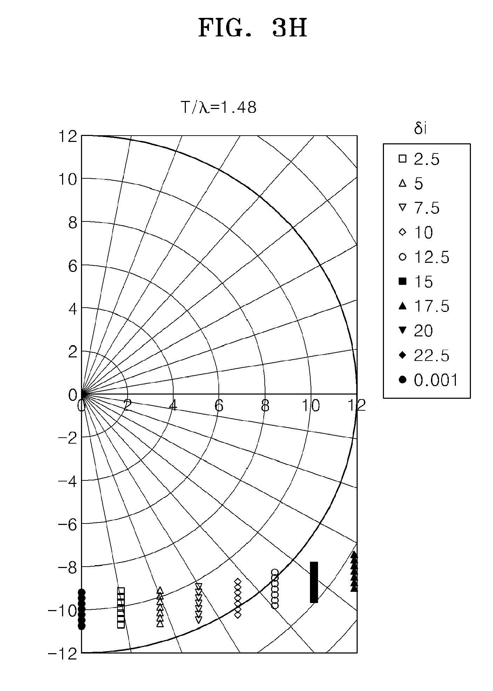

The distribution of the reflected light was observed with changes in period T and in rotation angle δᵢ of the diffracting grating 1 with respect to a predetermined wavelength λ in order to observe the relations between the period T and an arrangement direction of the diffracting grating 1 and the distribution of the reflected light. FIGS. 3A through 3H illustrate distributions of the reflected light observed when T/λ is 3.05, 2.64, 2.23, 2.00, 1.80, 1.70, 1.60, and 1.48. When the arrangement direction of a diffracting grating is fixed, and a period of the diffracting grating is short, the reflected light shifts in a vertical direction on graphs. When the period T of the diffracting grating is fixed, and a rotation angle of the diffracting grating is changed, the reflected light shifts in a horizontal direction on the graphs. Referring to FIGS. 3A through 3H, at least one of the period T and the arrangement direction δᵢ of the diffracting grating 1 can be adjusted to adjust a position of the reflected light. In other words, the coordinates (θ,ϕ) of the reflected light can be matched with the period T and the arrangement direction δᵢ of the diffracting grating 1. The coordinates (θ,ϕ) of the reflected light matched with the period T and the arrangement direction δᵢ can be made into a table using this characteristic. A wavelength λ of incident light may be combined with the period T and the arrangement direction δᵢ to make the coordinates (θ,ϕ) and the period T and the arrangement direction δᵢ into a table.

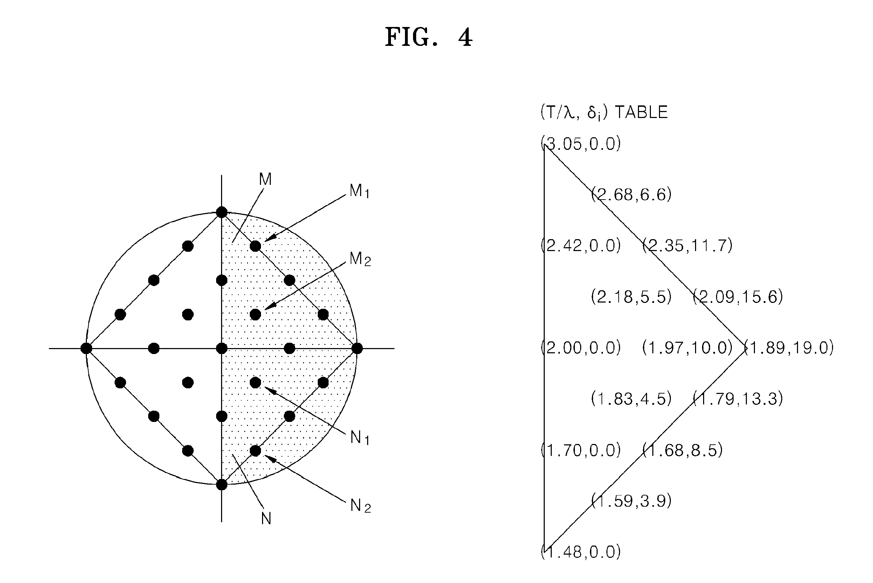

FIG. 4 illustrates a table (T/λ, δᵢ) matched with a diamond-shaped distribution of the reflected light. Twenty-five light spots are formed to make a Rhombus distribution of the reflected light, and the light spots in the first and fourth quarters M and N are matched on a one-to-one basis to make the table (T/λ, δᵢ). The first light spot M1 having (θ,ϕ)=(7.91°,18.4°) is matched with (T/λ, δᵢ)=(2.67,6.6), and the second light spot M2 (θ,ϕ)=(5°/ SQRT { 2} ,45°) is matched with (T/λ, δᵢ)=(2,18,5.5).

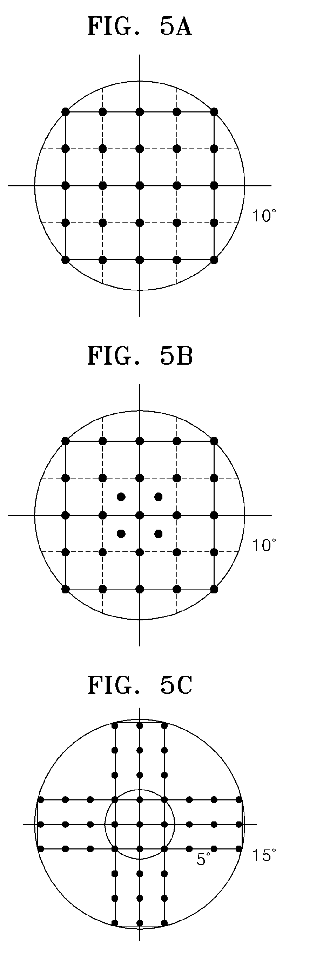

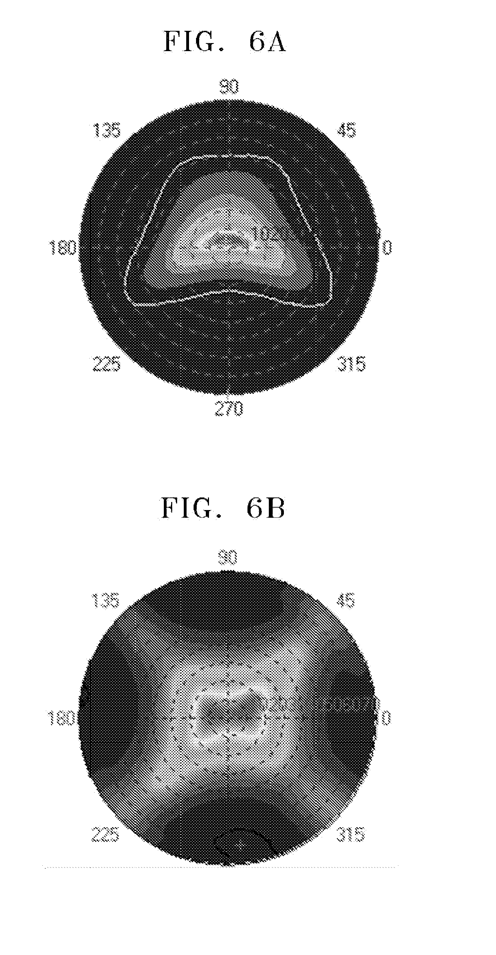

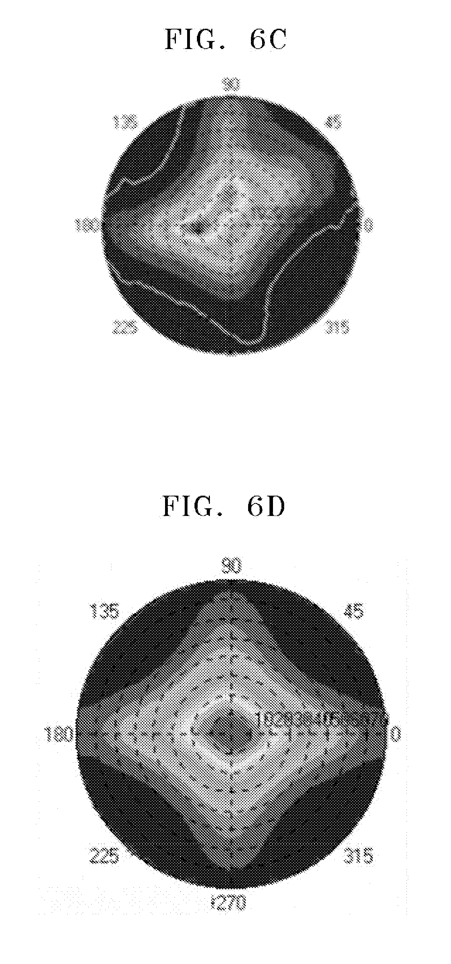

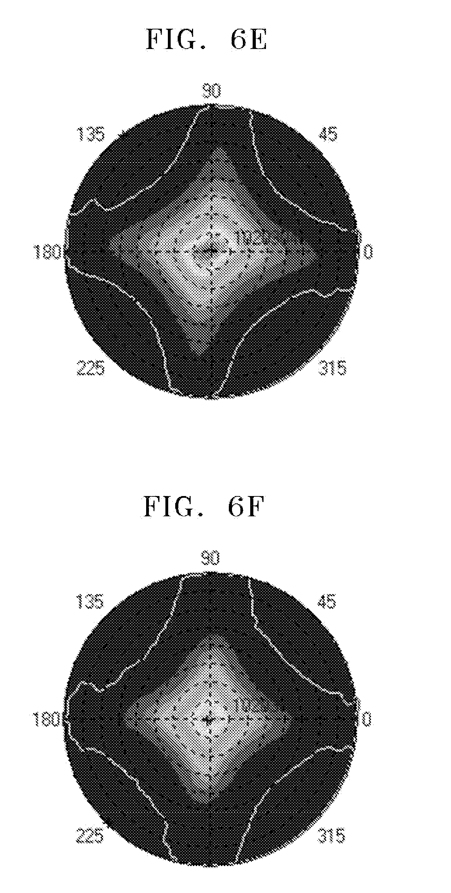

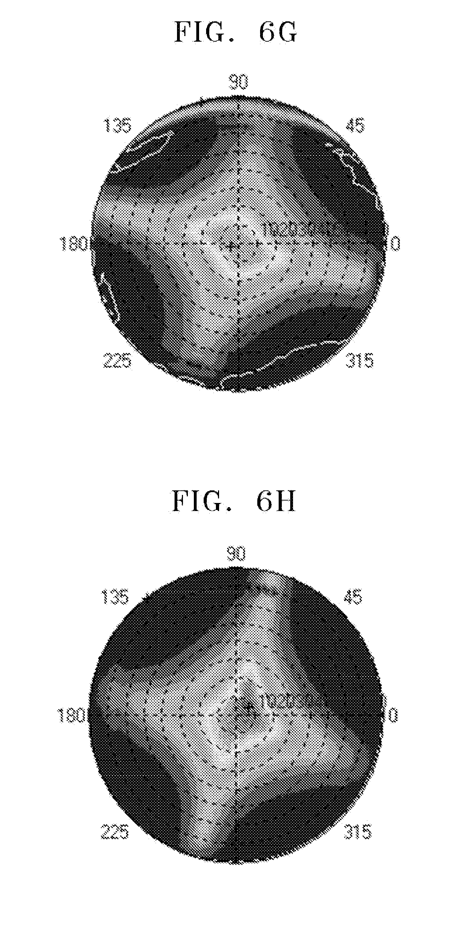

As described above, at least one of the period and the arrangement direction of the diffracting grating 1 can be adjusted to control the distribution of the reflected light. FIGS. 5A and 5B illustrate square shaped distributions of the reflected light within a viewing angle of ±10°, and FIG. 5C illustrates a cross-shaped distribution of the reflected light. In order to make such a light distribution, the coordinates of the distribution of the reflected light and the period and the arrangement direction of a diffracting grating corresponding to the coordinates can be obtained. As described above, the distribution of the reflected light may be formed into various shapes. In particular, the reflected light may have a viewing angle distribution that a viewer mainly views on a display. For example, if the viewer mainly views the display in vertical and horizontal directions but less in a diagonal direction, the reflected light may have a distribution of which diagonal direction is relatively shorter than vertical and horizontal directions. The diamond shaped light distribution illustrated in FIG. 4 or the cross-shaped light distribution illustrated in FIG. 5C may satisfy conditions. FIGS. 6A through 6H illustrate distributions of the reflected light observed depending on angles at which a mobile display is viewed.

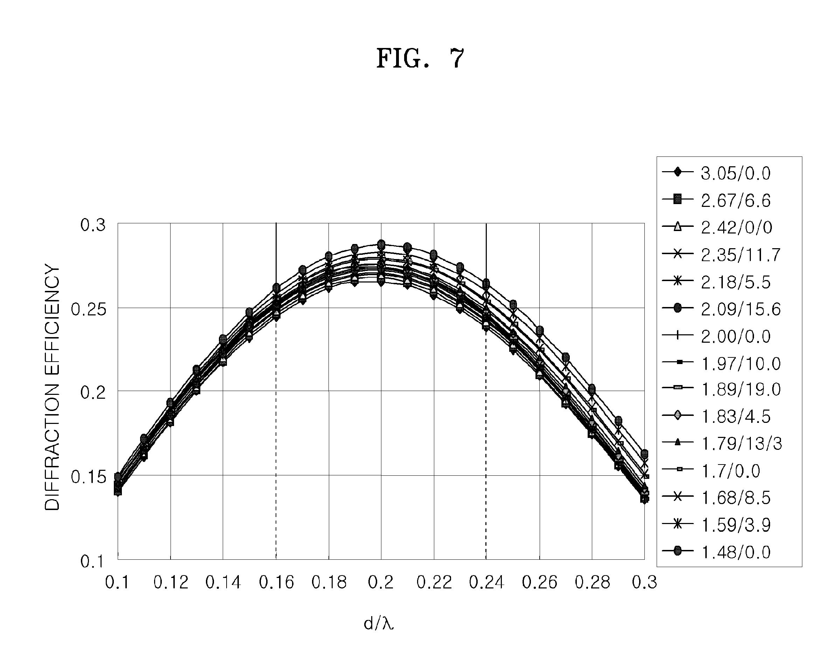

FIG. 7 is a graph illustrating the diffraction efficiency of a 1st-order diffraction beam with respect to a depth of a diffracting grating. Here, the depth of the diffracting grating can be adjusted to control an intensity of light. When the diffraction efficiency is calculated with changes of (T/λ, δᵢ), the 1st-order diffraction beam has a uniform distribution. A ratio of the depth of the diffracting grating to a wavelength of incident light may have in a range of 0.2 ±0.04 so that the diffracting grating has a diffraction efficiency of 0.25 or more. Accordingly, each of the diffracting grating cells can have uniformity of diffraction efficiency of 90% or more.

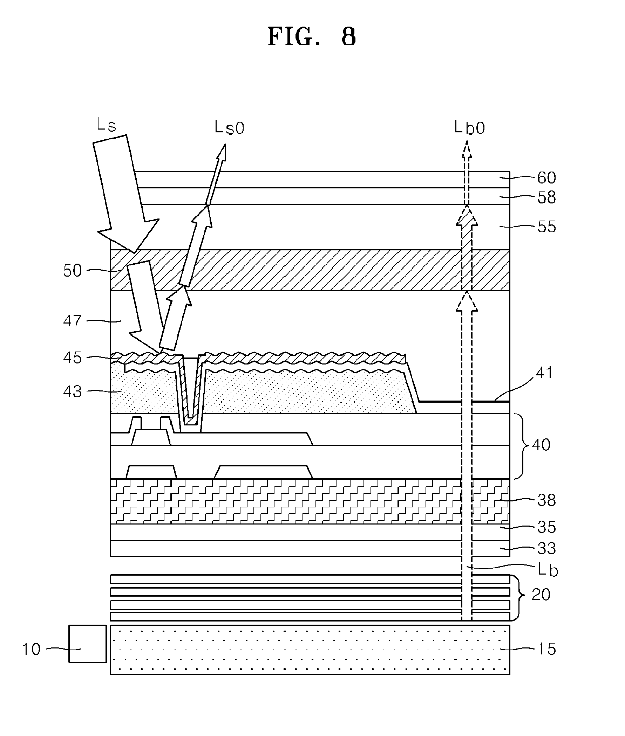

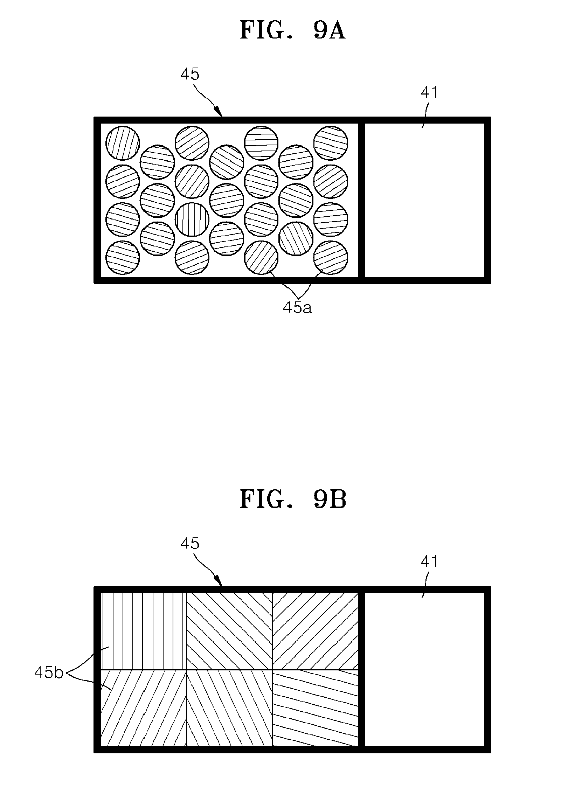

FIG. 8 is a cross-sectional view of a display including a reflective plate according to an embodiment of the present invention. Referring to FIG. 8, the display of the present embodiment has a reflection mode in which external light is reflected to form an image and a transmission mode in which an image is formed using backlight. The display includes a light source 10, a light guide plate 15 which guides light radiated from the light source 10, and a liquid crystal layer 47 which adjusts the transmissivity of the light. A reflective plate 45 is formed in an area of the liquid crystal layer 47, and a transmitting unit 41 is formed in the other area of the liquid crystal layer 47. The reflective plate 45 includes a plurality of diffracting grating cells 45a as shown in FIG. 9. The diffracting grating cells 45a include gratings, which are arranged at predetermined periods, reflect incident light, and define the distribution of the reflected light depending on at least one of an arrangement period and an arrangement direction of each of the gratings. Controlling the reflected direction distribution through an adjustment of the arrangement period and direction of each of the gratings is as described with reference to FIGS. 2 and 3A through 3H. Thus, detailed description in this regard will be omitted herein. The diffracting grating cells 45 are spaced apart from one another in FIG. 9A but may be adjacent to one another, as shown in FIG. 9B.

The diffracting grating cells 45a and 45b have grating arrangement periods and grating arrangement directions depending on a desired distribution of the reflected light. For example, the plurality of diffracting grating cells 45a may limit the direction distribution of the reflected light, the distribution having a square shape, a diamond shape, or a cross shape. Alternatively, the plurality of diffracting grating cells 45a may limit the distribution of the reflected light, wherein a diagonal direction of the distribution is relatively shorter than a horizontal or vertical direction thereof. For example, 25 diffracting grating cells are matched with one another on a one-to-one basis depending on distributions of 25 light spots having diamond shapes in order to form a diamond-shaped distribution of the reflected light. Here, every four or every three diffracting grating cells of the 25 diffracting grating cells can be alternately arranged in a line, and arrangement periods and arrangement directions of gratings can be determined so as to define directions of matched light spots.

The transmitting unit 41 may be a portion of the liquid crystal layer 47. A support layer 43 is formed underneath the reflective plate 45. A color filter 50 is formed on the liquid crystal layer 47. A first linear polarizing film 33, a first quarter wavelength plate 35, a first glass substrate 38, and a thin film transistor (TFT) layer 40 are formed between the light guide plate 15 and the liquid crystal layer 47. A second glass substrate 55, a second quarter wavelength plate 58, and a second linear polarizing film 60 are formed on the color filter 50. A plurality of layers 20 are formed between the light guide plate 15 and the first linear polarizing film 33 to increase light efficiency. The plurality of layers 20 may include a diffusion plate diffusing light, a prism sheet correcting a traveling path of the light, a prism film improving an orientation to advance the light passing through the prism sheet forward, etc.

Light Lb reflected from the light guide plate 15 is incident onto the liquid crystal layer 47 in an area corresponding to the transmitting unit 41. The transmissivity of the light LB is adjusted according to a voltage of the TFT layer 40, and the light Lb passes through the liquid crystal layer 47. Thereafter, the color filter 50 transmits only color light of the light Lb having a specific wavelength band.

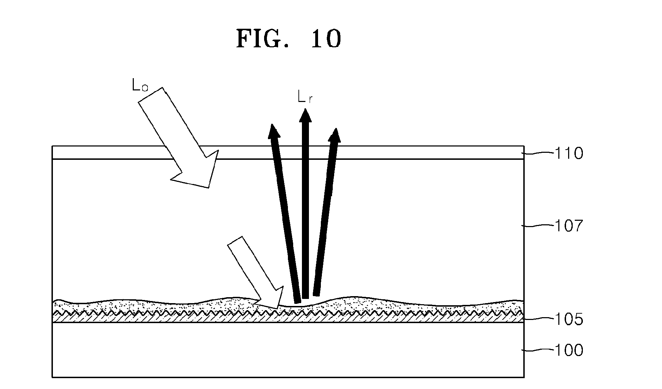

The display of FIG. 8 is a transreflective display, and a reflective plate of the present invention may be used as the transreflective display. FIG. 10 schematically illustrates a display according to an embodiment of the present invention. Referring to 10, the display includes a substrate 100, a reflective plate 105 which is disposed on the substrate 100, and a color unit 107 which is provided on the reflective plate 105 to transmit light of light Lo having a specific wavelength, wherein the light Lo is incident from an external source. A protective layer 110 may be further provided on the color unit 107. The color unit 107 may be formed of a medium including pigment, dye, or nano particles transmitting light having a specific wavelength. The light of the light Lo having the specific light is incident onto the reflective plate 105 through the color unit 107, and light Lr reflected from the reflective plate 105 is incident onto the eyes of a viewer. The reflective plate 105 can adjust the arrangement periods and arrangement directions of gratings, so that the reflected light Lr has a main viewing angle range of the viewer. The reflective plate of the present invention may be used in a reflective display and a reflective/transmitting display.

As described above, a reflective plate according to the present invention can include diffracting grating cells having adjusted arrangement periods and directions to distribute light based on a viewing angle of a viewer so as to control the distribution of reflected light. Thus, light efficiency can be improved, and the reflective plate can be used in a display that displays an image using external light, so as to increase the luminance of the image based on the viewer. The reflective plate of the present invention can be used in a reflective display, a transreflective display, and a reflective/transmitting display. Also, in a method of controlling a distribution of reflected light according to the present invention, at least one of an arrangement period and an arrangement direction of a diffracting grating can be adjusted so that the reflected light has an optimal distribution appropriate for an image display mode of a display.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A reflective plate comprising:
a plurality of diffracting grating cells comprising gratings which reflect incident light thereon,
wherein the gratings are arranged to have a period, and at least one of the period and a direction of the gratings is adjusted to define a distribution of reflected incident light.

2. The reflective plate of claim 1, wherein the plurality of diffracting grating cells define the distribution of the reflected incident light so that a diagonal direction of the distribution is shorter than one of a horizontal direction and a vertical direction of the distribution, the horizontal and vertical directions being perpendicular directions in a plane parallel to the plate.

3. The reflective plate of claim 1 or 2, wherein the plurality of diffracting grating cells define the distribution of the reflected incident light so that the distribution includes one of a square shape, a diamond shape, and a cross shape.

4. The reflective plate of claim 1, 2 or 3, wherein a ratio of a depth of the gratings to a wavelength of the incident light is in a range of 0.2 ±0.04.

5. A display comprising:
a reflective plate according to any preceding claim;
and
a color unit disposed on the reflective plate, which transmits incident light having a predetermined wavelength.

6. The display of claim 5, further comprising:
a transmitting unit disposed adjacent to the reflective plate; and
a backlight unit disposed under the reflective plate and the transmitting unit to supply backlight light to the transmitting unit.

7. A method of controlling a distribution of reflected light, comprising:
arranging a plurality of diffracting grating cells comprising gratings which reflect incident light, wherein the gratings are arranged to have a period; and
adjusting at least one of the period and a direction of the gratings of the plurality of diffracting grating cells to define a distribution of the reflected incident light.

8. The method of claim 7, wherein the plurality of diffracting grating cells define the distribution so that a diagonal direction of the reflected incident light is shorter than one of a horizontal direction and a vertical direction of the distribution, the horizontal and vertical directions being perpendicular directions in a plane parallel to the arrangement of gratings.

9. The method of claim 7 or 8, wherein the diffracting grating cells define the distribution of the reflected incident light so that the distribution has one of a square shape, a diamond shape, and a cross shape.

10. The method of claim 7, 8 or 9, wherein a ratio of a depth of the gratings of the plurality of diffracting grating cells to a wavelength of incident light is in a range of 0.2 ±0.04.

11. A reflective plate comprising:
a plurality of diffracting grating cells comprising gratings which reflect incident light thereon, the grating having a period and a direction,
wherein a distribution of reflected incident light is based on at least one of the period and the direction of the gratings.
